# DEMANDE DE BREVET EUROPEEN

(11) **EP 1 411 343 A2**
(43) Date de publication de la demande: **21.04.2004**
(21) Numéro de dépôt: 03078080.3
(22) Date de dépôt: 02.10.2003
(51) Int. Cl.: G01N 19/04, G01M 17/02, B60T 8/00, G01N 19/02

(54) **Dispositif et procédé de séléction de pneumatiques en fonction du couple pneumatique/sol**

(30) Priorité: 17.10.2002 FR 0213126
(71) Demandeur: Dufournier Technologies SAS, 63800 Cournon d'Auvergne (FR)
(72) Inventeur: Dufournier, Arnaud c/o Dufournier Technologies SAS, 63800 Cournon d'Auvergne (FR)
(74) Mandataire: Richebourg, Michel François

(57) **Abrégé**

Secteur technique des dispositifs et procédés visant à améliorer la connaissance ou caractérisation d'un pneumatique, notamment le module et le coefficient d'amortissement de sa bande de roulement, et de son adhérence sur un sol donné. L'invention concerne un système permettant de caractériser (en termes de paramètres importants pour l'adhérence et éventuellement le facteur d'usure) certaines données des pneumatiques testés ou disponibles, et du sol considéré afin de vérifier ou ajuster l'adéquation du couple pneumatique/sol.

Pour la caractérisation des paramètres importants pour apprécier l'adhérence du pneumatique on procède à la température d'essai T à l'étude de la courbe de réponse en fonction du temps de la bande de roulement du pneumatique considéré à un choc ou effort calibré de force Ho et on déduit de l'amplitude de la réponse une valeur représentative de la « perte » P et de l'amortissement R, et du module M. Pour la caractérisation de la rugosité du sol, on peut procéder par mesure de la hauteur des rugosités (macro et micro) par un capteur opérant par « stratigraphie en champ étendu ».

L'invention permet de mettre au point des pneumatiques, de sélectionner les meilleurs pneumatiques en fonction du sol, et/ou de l'état du sol (sec, humide), d'affecter une partie d'une série de pneumatiques à telles conditions (de course par exemple) et telle autre partie à telles autres conditions, voire d'écarter dans une série un pneumatique « hors normes », ou inversement d'adapter et / ou concevoir des routes adaptées aux pneumatiques commercialisés.

## Description

### Secteur technique de l'invention :

La présente invention concerne le secteur technique des dispositifs et procédés visant à améliorer la connaissance ou caractérisation d'un pneumatique, notamment le module et le coefficient d'amortissement de sa bande de roulement, et de son adhérence sur un sol donné, ce qui implique selon le Demandeur la caractérisation du sol lui même en termes de macro- et microrugosité, hygrométrie, etc..., et caractéristiques analogues influant sur l'adhérence.

L'invention vise donc à caractériser l'adhérence d'un pneumatique donné sur un sol donné, notamment de sa bande de roulement, c'est-à-dire à sélectionner un pneumatique en fonction d'un sol donné, ou encore développer un revêtement de sol adapté aux caractéristiques d'adhérence des pneumatiques, c'est-à-dire encore à caractériser des couples pneumatique / sol en termes d'adhérence du premier sur le second.

### Problème technique posé :

Deux caractéristiques sont prédominantes dans le choix d'un pneumatique, son facteur d'usure et son adhérence.

Ceci est vrai pour tout type de véhicule équipé de pneumatique, notamment en tourisme, utilitaire ou véhicules lourds, comme dans le domaine de la compétition, dont les véhicules de « rallye » et les voitures de Formule 1 ou compétitions analogues, mais aussi dans le domaine aéronautique par exemple. L'invention couvre l'ensemble de ces domaines.

Ce brevet s'attache au facteur « adhérence » et au facteur « usure ».

Il est apparu au demandeur que l'adhérence d'un pneumatique donné sur un sol donné dépendait non seulement du pneumatique, ce qui est l'approche actuelle mise en oeuvre pour sélectionner des pneumatiques, par exemple en F1, mais aussi grandement de certaines caractéristiques du sol.

Il convient donc, pour sélectionner efficacement un pneumatique, de disposer d'un ensemble d'informations soigneusement sélectionnées sur le couple pneumatique / sol.

En termes d'adhérence, un élastomère de bande de roulement pour pneumatique est caractérisé essentiellement par deux caractéristiques, son « module » et son facteur d'amortissement ou de « perte ». Lorsque l'on soumet un élastomère à une contrainte cyclique, c'est-à-dire une contrainte du type de celle rencontrée par la bande de roulement d'un pneumatique, un déphasage est induit entre l'instant où la contrainte est appliquée et l'instant où l'élastomère développe une « réponse » à cette contrainte. On peut mesurer l'angle delta de déphasage entre la courbe de contrainte / temps et la courbe de réponse / temps.

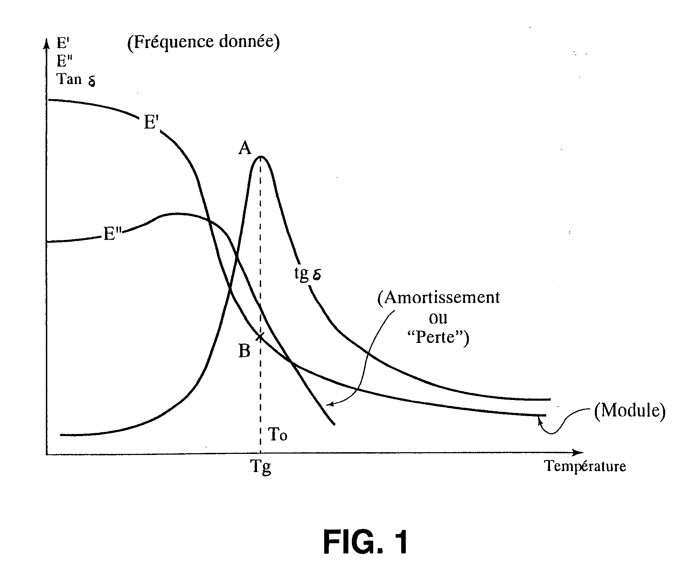

On a représenté sur la figure 1 annexée les courbes de module E', d'amortissement ou de perte E", et de tangente delta (division de la seconde par la première), en fonction de la *température* T de l'élastomère en essai et pour une fréquence de sollicitation donnée.

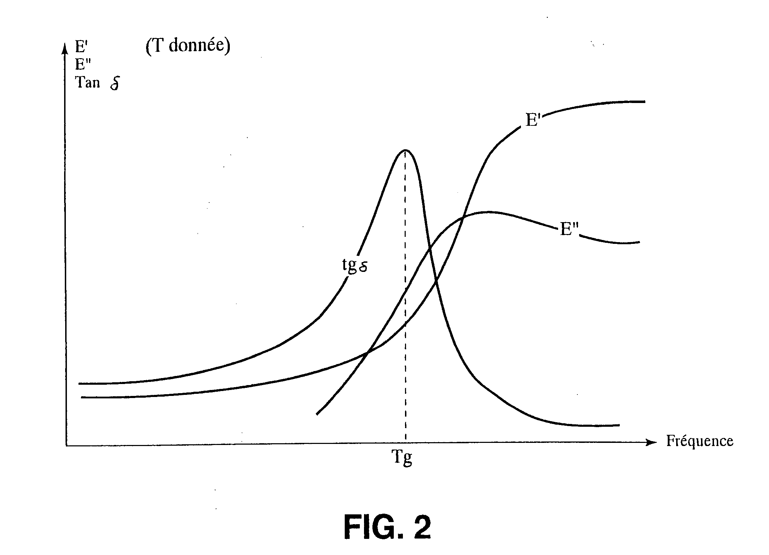

On a représenté sur la figure 2 annexée les courbes de module, d'amortissement ou de perte, et de tangente delta (division de la seconde par la première) , en fonction de la *fréquence* de sollicitation, et à une température d'essai donnée.

Dans le cadre de ses études d'analyse de l'adhérence, le Demandeur a été amené à distinguer les effets sur l'adhérence du module et du coefficient d'amortissement de l'élastomère.

Le module, en fonction du niveau de rugosité du sol, influence directement la surface du contact entre le pneumatique et le sol. Il ne doit cependant pas être trop faible pour éviter une dégradation rapide sous effort, c'est à dire une fatigue et une usure de l'élastomère de la bande de roulement. Or pour disposer d'une adhérence maximale, il est essentiel de disposer d'une surface de contact maximale entre le pneumatique et le sol.

Le coefficient d'amortissement, agit quant à lui de la manière suivante sur l'adhérence. Lorsqu'un effort est mis en oeuvre entre le pneumatique et le sol, la présence d'aspérités à la surface du sol entraîne sur l'élastomère de la bande de roulement des cycles de contrainte sous la forme de compression - relâchement. En fonction des caractéristiques de l'élastomère, et en particulier du déphasage entre les courbes de contrainte et de relâchement, une partie de l'énergie de compression n'est pas restituée en phase de relâchement. Cette énergie "perdue" est en fait transformée en force d'adhérence.

Il faut donc pour atteindre une adhérence élevée disposer d'un module faible et d'un coefficient d'amortissement élevé, c'est à dire d'une tg delta élevée. En effet, tg delta = E" / E' .

Dans la figure 1, on voit que la courbe tg delta passe par un maximum A (adhérence maximum) pour une température donnée.

On sait de plus que lorsque T augmente, un élastomère devient plus « mou », son module décroît. L'effet de la température sur le coefficient d'amortissement est également fortement marqué.

Dans la figure 2, on voit que la courbe tg delta passe par un maximum (adhérence maximum) pour une fréquence donnée.

En fonction de la fréquence des vibrations subies par un élastomère, on obtient des courbes inverses de celle de la température (loi WLF). Ainsi, lorsque la fréquence augmente, un élastomère devient plus « dur », son module croît. L'effet de la fréquence de sollicitation sur le coefficient d'amortissement est ici aussi fortement marqué.

La fréquence de sollicitation est bien sûr fonction des caractéristiques en terme de fréquence spatiale de la rugosité du sol, mais aussi de la vitesse de glissement de la bande de roulement du pneumatique par rapport au sol.

### Art antérieur :

On connaît notamment les brevets déposés par Volskwagen™ (02.04.90) (DE 40 10 507 ) et Norsemeter™ ( WO 96 / 14564 ) qui s'intéressent à la mesure en roulage sur véhicule du niveau d'adhérence, mais ne mesure ni la rugosité sol et donc la fréquence de sollicitation de l'élastomère, ni la température de l'élastomère. En outre, ces dispositifs donnent des résultats fortement liés à l'état d'usure et de fatigue du pneumatique testé et aux caractéristiques du véhicule utilisé pour la caractérisation.

L'industrie a donc cherché a travailler sur le problème de l'adhérence des pneumatiques, mais sans pouvoir intégrer tous les paramètres utiles et sans éliminer les facteurs d'erreurs ou d'approximation ou de non-reproductibilité des mesures et calculs, trop élevés, comme l'usure, la fatigue etc.... L'approche du travail sur le « couple » pneumatique-sol a été totalement méconnue.

Il existe donc un besoin important, même s'il est actuellement totalement méconnu, pour un système intégrant ce facteur « couple » (pneumatique ; sol) et capable de générer des paramètres très précis de sélection d'un type de pneumatiques pour un sol donné, par exemple pour tel circuit de F1, telle route de rallye, telle autoroute, et analogues ou inversement capable de générer des paramètres très précis de sélection d'un type de revêtement de sol pour des caractéristiques de pneumatique et d'utilisation données, c'est-à-dire permettant de concevoir des revêtements et des profils routiers mieux adaptés à des pneumatiques existants et commercialisés, par exemple pour améliorer la sécurité routière, notamment en conditions défavorables, pluie, et analogues, ou simplement en améliorant l'adhérence.

### Résumé de l'invention :

L'invention concerne donc un tel système, ainsi que les moyens permettant d'accéder aux données permettant de caractériser (en termes de paramètres importants pour l'adhérence et éventuellement le facteur d'usure) certaines données des pneumatiques testés ou disponibles, et du sol considéré afin de vérifier ou ajuster l'adéquation du couple pneumatique / sol.

### Description détaillée de l'invention :

L'invention concerne donc un procédé pour effectuer, sur des critères d'adhérence maximale ou optimale sur un sol, la sélection d'un ou plusieurs types de pneumatiques parmi un choix plus large de pneumatiques, à une température d'utilisation T donnée des pneumatiques , ou inversement la sélection ou la conception d'un sol par rapport aux caractéristiques des pneumatiques utilisés et de la température d'utilisation, caractérisé en ce que
a) on entre la température T et on trace la courbe tg delta en fonction de la température T et la courbe du module E' de l'élastomère de la bande de roulement du pneumatique,
b) on effectue un relevé de rugosité (profil) du sol considéré , éventuellement en fonction (b') de son « état » (sec, humide, mouillé,...), et éventuellement (b") des caractéristiques de drainage du sol, puis pour une vitesse de glissement donnée, on établit le spectre des sollicitations engendrées par le glissement sur le sol
c) on évalue le niveau de compatibilité ou corrélation entre les deux courbes respectivement du pneu et du sol
d) on sélectionne le ou les pneumatiques dont le pic de la courbe de tg delta correspond le mieux au pic de la courbe de rugosité du sol ou inversement en fonction de l'objectif recherché, on sélectionne le ou les revêtements correspondant le mieux au pic de tg delta du pneu.

En ce qui concerne l'étape a), c'est-à-dire la caractérisation des paramètres importants pour apprécier l'adhérence, dans le cadre du « couple » selon l'invention, on procède à la température d'essai T ou en effectuant un balayage en température (couvrant typiquement la gamme de température -30°C à +150°C), à l'étude de la courbe de réponse en fonction du temps, de la bande de roulement du pneumatique considéré à un choc ou effort calibré de force H, et on déduit de l'amplitude de la réponse une valeur représentative P, R de la « perte » par l'élastomère , puis de cette valeur et du niveau de l'enfoncement mesuré lors du choc ou de l'effort, on en déduit une valeur représentative du module de l'élastomère.

D'une manière générale, on balaie toute une gamme de fréquence de choc ou effort incluant en particulier les fréquences correspondant aux fréquences de roulement du pneumatique (quelques hertz à quelques dizaines de hertz), les fréquences correspondant à l'indentation et aux sollicitations liées aux macro-rugosité des sols (typiquement 1kHz à 1 MHz) mais aussi les fréquences liées aux forces d'adhésion et aux micro-rugosités des sols (typiquement 1 MHz à 1 GHz).

De manière préférée, on travaille à la température d'essai T en prenant impérativement le soin de vérifier que tous les pneumatiques sont bien à cette température, on provoque ledit choc , selon un mode de réalisation non limitatif, par l'impact d'une pointe de masselotte mue par un ressort calibré, lequel est étiré d'une longueur H également calibrée, puis lâché pour libérer la masselotte, et on enregistre les mouvements oscillatoires de la masselotte (c'est-à-dire une grandeur représentative de la réponse ou réaction du pneumatique à l'enfoncement dû au choc) en fonction du temps.

Dans une variante intermédiaire, le système comporte un ressort de raideur variable, ou encore des masselottes interchangeables de masses différentes ou encore plusieurs combinés ressort / masselotte calés sur des fréquences différentes.

Selon un mode de réalisation particulier, le procédé incorpore pour l'étape a) un balayage des valeurs à différentes températures T, ou un balayage en fonction de la fréquence. On accède donc à la variation des points E et R de la figure 1.

On peut donc accéder aux courbes de module E' et d'amortissement E" et donc à la courbe tg delta , ou à des parties spécifiques de celles-ci.

Il est important de noter que l'on peut se contenter d'accéder à deux points A et B (cf. figure 1) de la courbe de module et de la courbe tg delta à une température d'essai T° donnée (ou à une fréquence donnée).

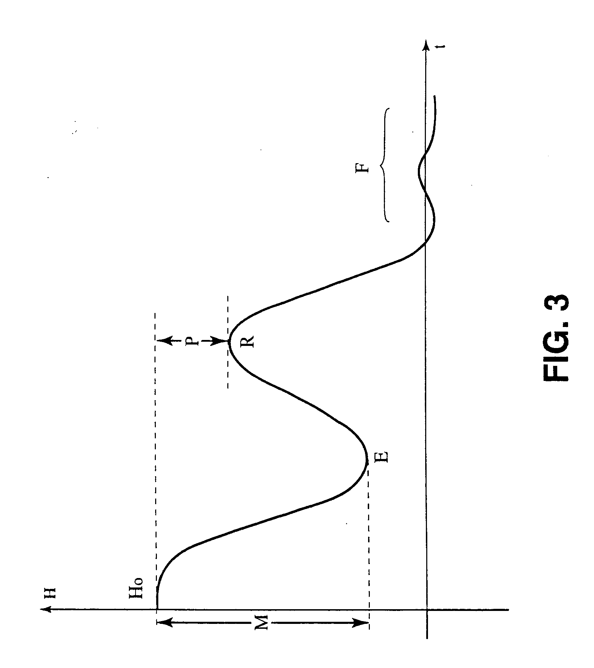

On a représenté une telle courbe H = f (t) sur la figure 3 annexée. Cette figure représente la courbe donnant le rebond de la masselotte définie ci-dessus après un choc sur l'élastomère, provoqué par simple gravité en lachant la masselotte d'une hauteur H° et en mesurant le rebond au cours du temps.

On provoque un choc de « magnitude » H° à t = 0, on évalue l'enfoncement E de l'élastomère de la bande de roulement sous le choc, puis on évalue le rebond R de l'élastomère et donc la perte P. La valeur R est représentative de l'amortissement (et donne accès à la perte), et à partir de cette valeur et de celle de E on en déduit la valeur du module. On pourra pour cela simplement modéliser le comportement de l'élastomère comme un combiné « ressort amortisseur » suivant une représentation bien connue de l'homme de métier.

Dans le cas de la masselotte décrite ci dessus, H° est l'amplitude calibrée sous laquelle on étire le ressort calibré.

La zone F peut comporter des oscillations négatives, ce qui est probablement dû à un effet de fréquence.

Dans le cas des variantes préférés ou intermédiaires, les mesures peuvent être effectuées sur site, ce qui est un avantage très important, à l'aide d'un appareil non limitatif qui sera décrit ci-après et d'une électronique connue reliée à un ordinateur portable ou PC programmé pour effectuer les calculs et tracés si dessus, et les étapes du procédé selon l'invention, et également des comparaisons par rapport à une base de données comportant les caractéristiques connues de types différents de pneumatiques à différentes températures, et éventuellement les abaques mentionnées ci-dessous.

Selon une option non limitative mais très intéressante, on peut en effet, même si les pneumatiques qualifiés ne sont pas à la température d'essai souhaitée, qualifier et comparer des pneumatiques, non plus à une température d'essai T°, mais à des températures différentes, en utilisant des abaques préalablement réalisées en laboratoire sur différentes gommes et à différentes températures ( Mode « recalé »).

En ce qui concerne l'étape b), c'est-à-dire la caractérisation des paramètres importants pour apprécier l'adhérence, dans le cadre du « couple » selon l'invention, on rappellera tout d'abord un certain nombre de facteurs et de paramètres, afin de mesurer le caractère ambitieux du procédé selon l'invention. Il est également possible que le foisonnement de paramètres ait dissuadé l'industrie d'intégrer le facteur « sol » dans les études d'adhérence.

Un sol peut être caractérisé (toujours uniquement du point de vue de l'évaluation de l'adhérence et éventuellement de l'usure) par sa rugosité et par son état. Les relevés de sol sont, dans le domaine d'utilisation et avec les revêtement actuels indépendant de la température. La seule température à prendre en compte est celle finale de l'élastomère dans l'aire de contact (c'est-à-dire la surface de contact de la bande de roulement avec le sol) .

En ce qui concerne la rugosité, le Demandeur distingue la « macro »- et la « microrugosité » et considère le couple pression / rugosité.

Cette approche est entièrement originale.

La macro rugosité est formée par des profils de sol variant autour de l'horizontale de + / - 0,1 mm à quelques cm et de longueur spatiale sensiblement équivalente. On caractérise la macro rugosité par sa « hauteur » h et par la distance d séparant deux telles macro rugosités.

La micro rugosité est constitués par les défauts de surface allant de environ 1 micron à 0,1 mm environ et de longueur spatiale sensiblement équivalente.

Ces rugosités sont sensibles à l'état du sol.

La micro rugosité est très sensible à la présence de poussières fines, sable, terre, d'huile, d'eau, neige, glace, déchets fins de gomme et autres salissures fines.

La macro rugosité est plus sensible à la présence et la quantité d'eau (notamment de pluie), aux gravillons, à la présence de terre, neige ou glace, le facteur prépondérant étant généralement l'eau ; la macro-rugosité dépend alors à un instant t1 du volume (ou hauteur) d'eau sur le sol, par rapport à la hauteur des macro rugosités, et de l'évolution de cette hauteur d'eau avec le temps (augmentation si la pluie augmente, ou diminution par le facteur drainage du sol, les deux paramètres étant naturellement antagonistes).

Sur un sol sec, la macro rugosité, si elle met en oeuvre des forces macro-hystérétiques (fortes mais peu nombreuses) dans la bande de roulement du pneumatique est néanmoins généralement néfaste, car elle est la cause d'une perte de surface de contact pneumatique / sol de l'ordre de quelques dizaines de pour-cents, typiquement 50 %. C'est la raison pour laquelle on cherche en compétition à maximiser cette surface par des pneumatiques lisses ou « slick ».

L'adhérence est par ailleurs dûe au facteur « indentation » pour environ 25%, et à l' « adhésion » pour environ 75%. L'indentation est fonction de l'élasticité et surtout de la plasticité du matériau sur les macro rugosités, c'est-à-dire de l'effort reçu et restitué en partie, avec un phénomène d'hystérésis. L'adhésion est surtout causée par l'action des micro rugosités (force très importante crée par la somme d'un très grand nombre de micro forces d'hystérésis sur la microrugosité du sol, ce qui explique l'adhérence très forte constatée sur une plaque de verre par exemple) et des forces de Van der Waals (également somme importante de très nombreuses micro forces intramoléculaires qui apparaissent dès que la distance de la gomme au sol est inférieure à environ 100 microns.

L'étape b) va donc essentiellement consister à mesurer les hauteurs h des rugosités et leur fréquences spatiales, (soit le spectre spatial du profil), afin d'établir pour une vitesse de glissement donnée le spectre en fréquence temporelle des sollicitations imposées par le profil du sol.

L'étape b) incorpore de manière tout-à-fait préférée une étape b') selon laquelle on détermine l'état du sol, notamment la hauteur d'eau, et son influence sur la rugosité utile (c'est à dire la rugosité en contact avec le pneumatique).

De manière encore préférée, l'étape b') comporte une étape b") de détermination des caractéristiques de drainage du sol et son influence sur l'état du sol et donc sur la rugosité utile.

Selon un mode de réalisation particulier, on entre dans l'algorithme de calcul les états de sols suivants :
- sec
- humide (mouillé mais pas d'accumulation d'eau)
- faible hauteur d'eau (faible pluie)
- forte hauteur d'eau ( forte pluie)

On notera que dans le procédé du Demandeur, on peut utiliser le facteur « drainage du sol », mais plus pour un pronostic d'évolution, et non pas dans l'évaluation des sols à faible ou forte hauteur d'eau où le Demandeur considère plutôt le cas d'une pluie permanente et d'une hauteur d'eau présente par m2 en surface.

Actuellement, les mesures de rugosité du sol sont effectuées par un « skid » c'est-à-dire un système que l'on fait évoluer sur le sol, avec un bras laissant traîner une masse ou un patin traîné sur ledit sol.

Enfin, on emploie un « véhicule à cinq roues » comportant une roue centrale que l'on place sous charge et dont on étudie le comportement.

Ces systèmes rudimentaires ou bien ne reflètent pas du tout le comportement d'un pneumatique, notamment sa température de contact et son usure, ou bien, pour le dernier, introduisent des paramètres variables tels que l'usure du pneumatique et sa température à chaque essai, qui peuvent même varier, notamment la température et l'usure, en cours d'essai.

De tels systèmes ne donnent au mieux qu'une indication globale, qui peut tout au plus servir de référence, mais qui ne caractérise pas la rugosité en ses deux composantes, macro et micro, ni en son état.

Selon l'invention, on propose de mettre en oeuvre l'étape b), de manière non limitative mais préférée, en effectuant un relevé de profil sol en déplaçant, sur un axe ou dans un plan sensiblement suivant l'horizontal, un capteur de mesure de distance dirigé vers le sol.

Selon un mode de réalisation particulier, non limitatif, ledit capteur utilise un faisceau de lumière blanche projeté sur le sol, et dont on trace le spectre chromatique à son retour vers la source, ledit faisceau retour étant dévié vers un spectromètre par un miroir semi réfléchissant intercalé sur son chemin optique retour. Il s'agit de l'application du principe optique de « stratigraphie en champ étendu », qui utilise et traite les points de focalisation de chaque couleur composant la lumière, qui sont fonction des défauts de la lentille.

La précision avec ce type de capteur est de 1 nm à 300 nm , l'erreur de linéarité de + / - 0,1 %, la cadence de mesure de 30 à 1000 Hz, avec une source lumineuse halogène de 50 W, la profondeur de mesure est de 20 microns à 10 mm .

On obtient typiquement des mesures à + / - 0,3 microns.

Selon encore un mode de réalisation particulier, non limitatif, ledit capteur est un dispositif de mesure de distance par laser, utilisant en particulier le principe bien connu de la triangulation optique.

D'autres modes de réalisation sont également possibles à l'aide de mesures par interferométrie, ou encore à l'aide d'un palpeur mécanique de précision, ces dernières solutions étant plutôt réservées à des qualifications d'échantillons prélevés sur des sols et effectuées en laboratoire.

Selon encore un mode de réalisation particulier, non limitatif, de l'invention, on effectue le relevé de profil sol en déplaçant ledit capteur selon une ligne ou trait.

Selon un mode nettement moins préféré, car plus compliqué et surtout plus long, on effectue le relevé de profil sol en déplaçant ledit capteur sur plusieurs lignes ou traits d'une surface donnée du sol.

Selon un mode encore moins préféré, pour les mêmes raisons, on effectue le relevé de profil sol en déplaçant ledit capteur sur une surface donnée du sol.

On a constaté selon l'invention, de manière totalement surprenante, qu'un sol pouvait être valablement caractérisé en rugosité par une mesure *selon un seul trait*, ce qui rend la mesure très rapide à mettre en oeuvre.

Toujours dans l'étape b), on relève donc la courbe de rugosité du sol selon ledit trait.

L'algorithme programmé calcule alors le spectre spatial des rugosités sol, puis pour une vitesse de glissement V donnée, et à l'aide de l'équation F = V / d (avec F fréquence de sollicitation engendrée par une rugosité, d longueur d'onde spatiale de la rugosité), il en extrait le spectre en fréquence temporelle des sollicitations engendrées par le sol.

Dans une vision moins précise mais plus facile à interpréter par l'utilisateur afin de classifier le sol caractérisé, il fournit également des critères représentatifs de la macro et de la micro-rugosité (basés sur un calcul de dispersion tel que l'écart type effectué dans les plages de fréquences spatiales correspondant respectivement à la macro et à la micro-rugosité) ainsi qu'une distribution des niveaux de rugosité en fonction des longueur d'onde spatiales.

L'homme de métier aura compris que dans l'étape b) on effectue un relevé de profil sol incluant les paramètres de macro et de micro rugosité du sol, approche entièrement originale.

Dans l'étape c), l'algorithme procède à l'évaluation de la compatibilité ou corrélation entre les courbes obtenues dans les étapes a) (courbe de réponse du pneumatique) et b) (courbe de sollicitation par le sol); enfin, dans l'étape d), on recherche et on évalue l'écart entre le pic de la courbe tg delta et celui de la courbe de rugosité du sol, où dans une version plus performante le recouvrement des courbes de sollicitation et de réponse et on sélectionne les pneumatiques ou en fonction de l'objectif visé les sols correspondant à l'écart est le plus faible ou au recouvrement le plus élevé.

Par ce procédé original, on sélectionne donc les pneumatiques qui sont le mieux en phase avec la nature du sol, c'est-à-dire qui vont le mieux réagir, en termes d'adhérence, au sol considéré, à la température donnée. Inversement et en fonction de l'objectif visé, on sélectionne donc les revêtements de sol qui sont le mieux en phase avec les pneumatiques et l'utilisation (incluant notamment la température), c'est-à-dire les revêtement qui vont permettre aux pneumatiques, en termes d'adhérence et éventuellement d'usure de fournir le niveau de performance le plus élevé.

Selon une option tout-à-fait préférée, on intègre dans le calcul les paramètres d'état du sol, c'est-à-dire à ce jour la présence ou non d'eau selon les quatre niveaux établis plus haut (naturellement, on pourrait facilement, par modification simple de l'algorithme, employer moins ou plus de niveaux, selon que l'on souhaite plus ou moins affiner le calcul. Mais quatre niveaux représente un excellent compromis et est en tout cas suffisant pour une très bonne détermination de l'état du sol).

On peut décrire comme suit, schématiquement, le calcul d'adhérence effectué dans ladite étape c).
1. On utilise un modèle de bande de roulement pour identifier la surface réelle de contact constitué par les points du pneumatique en contact réel avec le profil mesuré du sol et déterminer la pression de contact.

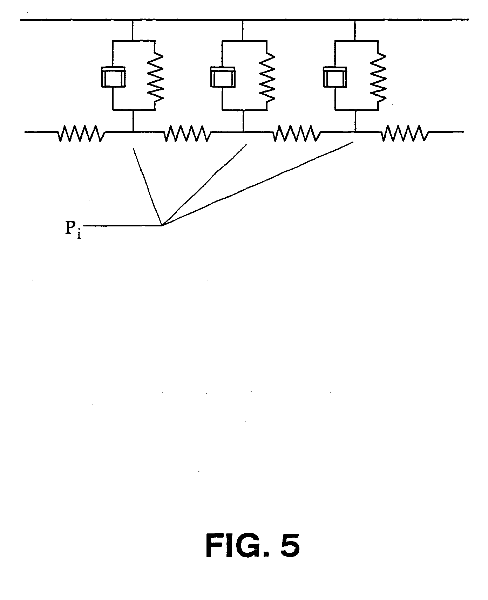

   La figure 5 annexée représente un exemple de modèle physique utilisé pour modéliser la bande de roulement dans son contact avec le profil du sol : les symboles employés sont classiques pour l'homme de métier (ressorts et « amortisseurs ») et les points Pi représentent les points de contact de la bande de roulement avec le profil sol.
   Remarque : Il faut bien sur tenir compte dans l'utilisation du profil sol de la présence éventuelle d'eau, qui en portant certaines parties de la bande de roulement diminue la surface de contact réelle entre le sol et le pneumatique. Pour cela, on introduit un modèle décrivant le volume d'eau que le pneumatique (travail de la sculpture) et le sol (drainage de surface) sont capables d'évacuer par unité de temps ou, ce qui revient au même, le débit d'évacuation pour une vitesse donnée et on en déduit le volume d'eau restant donc le partie émergée du profil sol, seule partie du sol susceptible d'être prise en compte dans le calcul de l'adhérence. Bien sûr, la surface de l'eau en contact avec le pneumatique porte en partie celui-ci, ce portage étant aisé à calculer à l'aide du modèle, mais ceci ne permet pas de gérer d'effort transversal.
   Pour chaque point de la bande de roulement en contact avec le sol, le modèle donne la pression de contact.
   On peut donc en chaque point de contact déterminer la micro-rugosité µi du sol en ce point et la pression de contact locale Pi , soit le couple (pi,Pi).
   L'utilisation du facteur « pression de contact » est également un point très original de l'invention.
2. A partir de la micro-rugosité µi (ou pour être plus précis du spectre de micro-rugosité en ce point de contact) et de la vitesse de glissement, on en déduit aisément la fréquence de sollicitation de l'élastomère.
3. On en déduit pour une température donnée, les caractéristiques de module et de coefficient de perte de l'élastomère, ce qui revient à dire dans une vision simplifiée, les caractéristiques du ressort et de l'amortisseur.
4. Comme on connaît l'effort vertical en ce point (Pression local Pi), on peut donc aisément en déduire l'effort transversal ft que l'élément de bande de roulement peut générer.
5. Par somme des efforts sur tous les points de contact de l'aire de contact, on en déduit l'effort transversal Ft global que l'aire de contact peut générer, et donc, en le ramenant à la charge vertical Z portée par la roue, on en déduit la coefficient d'adhérence : Ft/Z.

Pour intégrer l'état du sol, on redresse dans une première étape la courbe de rugosité du sol, c'est-à-dire que l'on met en oeuvre un algorithme qui transforme un profil réel en un profil « horizontal ». On introduit dans une seconde étape les paramètres de présence d'eau, notamment faible ou forte hauteur d'eau, ou seulement mouillé. On a introduit auparavant dans la mémoire les micro ou macro rugosités qui sont « comblées » par chaque type d'état. Il en résulte un profil dont, selon la hauteur d'eau, certaines macro ou micro rugosités ont disparu sous ladite eau. On intègre à cette étape un coefficient permettant d'intégrer le capacité de la bande de roulement du pneumatique à évacuer une partie de ladite eau. L'algorithme effectue alors le même calcul d'adhérence sur la base de cette nouvelle courbe de rugosité utile, c'est à dire en contact avec le pneu. On obtient des valeurs naturellement différentes selon l'état du sol.

On peut ainsi soit sélectionner les meilleurs pneumatiques pour une route ou un circuit donné, soit écarter dans une série de pneumatiques ceux qui s'écartent trop (du fait de la dispersion inévitable en fabrication) de la moyenne ayant fait l'objet du cahier des charges.

Inversement, on peut soit sélectionner les meilleurs revêtement (ou les concevoir) pour une route ou un circuit donné en fonction des caractéristiques des pneumatiques utilisés et des conditions d'utilisation (température, hygrométrie...), soit caractériser un tracé et valider ou non le tracé en entier ou certaines portions de ce tracé en fonction de caractéristiques (du fait de la dispersion inévitable en fabrication) ayant fait l'objet du cahier des charges.

Dans une série de pneumatiques , on est également en mesure, même pour les pneumatiques « conformes » de repérer de faibles dispersions en coefficient de module et / ou en coefficient de perte, avec suffisamment de précision pour équipper par exemple le train avant des pneumatiques présentant tel type de coefficients, et le train arrière de pneumatiques présentant tel autre type de coefficients. On peut donc ainsi, dans une série de pneumatiques, conformes au cahier des charges, tirer parti des inévitables petites dispersions de fabrication pour optimiser le comportement de la voiture.

L'invention couvre également les dispositifs permettant de mettre en oeuvre le procédé de sélection décrit ci-dessus.

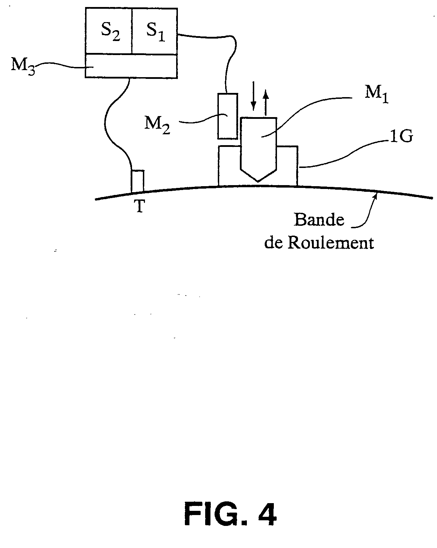

Pour la mise en oeuvre de l'étape a), on a mis au point une « tête de caractérisation » du pneumatique, un exemple non limitatif de tête de caractérisation étant représenté sur la figure 4 annexée.

Selon le mode général, la dite tête, celle ci comporte ( figure 4)
- une interface géométrique IG permettant d'appliquer ladite tête sur la bande de roulement,
- un moyen M1 permettant d'appliquer un choc ou effort calibré de force H sur la bande de roulement du pneumatique P,
- un moyen M2 adapté pour mesurer l'amplitude de la réponse de ladite bande de roulement audit choc, c'est-à-dire la distance ou hauteur de « rebond » du moyen M1 ou d'un repère fixe solidaire de M1,
- un système S1 adapté pour effectuer le suivi et l'étude de la courbe de ladite réponse en fonction du temps
- un système S2 adapté pour en déduire par le calcul une valeur représentative de la « perte » par l'élastomère de la bande de roulement puis, à partir de cette valeur et du niveau de l'enfoncement mesuré lors du choc ou de l'effort, pour déduire une valeur représentative du module de l'élastomère.
- un moyen M3 de mesure de la température d'essai T et éventuellement des moyens de montée en température permettant un balayage en température (couvrant typiquement la gamme de température -30°C à +150°C).

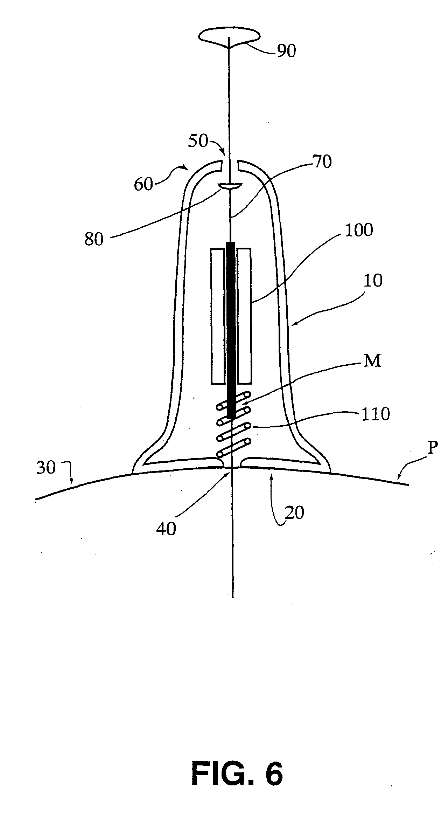

Selon un mode de réalisation non limitatif, cf. figure 6, cette tête de caractérisation est constituée d'un corps 10 dont une première extrémité 20 est dessinée pour s'adapter étroitement à la surface 30 de la bande de roulement d'un pneumatique P, ledit corps contenant une masselotte M capable de coulisser avec un minimum de frottement selon l'axe longitudinal du corps, en passant par un orifice central 40 ménagé dans ladite première extrémité 20 et par un autre orifice central 50 ménagé dans la seconde extrémité opposée 60 dudit corps, ladite masselotte coulissant dans sa partie médiane dans un capteur 100 réalisant par couplage électromagnétique une mesure représentative du déplacement d'un point-repère de la masselotte, ladite masselotte étant solidaire dudit corps par l'intermédiaire d'un ressort 110 de raideur calibrée, et étant prolongée vers ladite seconde extrémité du corps par une tige ou tirette 70 traversant ledit autre orifice, avec une limite mécanique à son déplacement, notamment une butée 80 et un organe de préhension 90 ergonomique c'est-à-dire autorisant une bonne prise et un « lâchage » aussi instantané que possible.

L'essai consiste à appliquer ledit corps sur la bande de roulement du pneumatique, par son extrémité adaptée, à tirer sur la tige jusqu'à la butée, ce qui donne le poin H° de la figure 3, et à relâcher brusquement ladite tige. L'extrémité de la masselotte va heurter la bande de roulement, s'y enfoncer (naturellement de manière presque imperceptible), ce qui donne le point E et donc la grandeur M représentative du « module », puis être soumise à un rebond (réaction de l'élastomère) qui donne le point R et donc la « perte » P, puis à des mouvements d'oscillation très vite atténués (zone F).

Les données sont envoyées vers une unité centrale de calcul, dans laquelle on a déjà rentré la température d'essai T et qui contient également le mode de calcul des courbes tg delta, courbe de module E' et courbe d'amortissement ou de perte E" (cf. figure 1) ; les courbes E' et E" donnent la courbe tg delta, et on conserve pour le calcul de sélection seulement les courbes E' et tg delta, la courbe E" n'étant pas pratique à utiliser. On peut aussi ne prendre que deux points A et B, cf. figure 1, à une température T donnée. On peut aussi balayer la gamme de température T ou de fréquence, comme déjà indiqué.

Selon une option, on peut également disposer un thermocouple sur ou dans la bande de roulement.

Une telle mesure ne prend que quelques secondes. Il est donc possible d'effectuer très rapidement des mesures nombreuses sur différents points de la bande de roulement, et de calculer la moyenne des valeurs pour ledit pneumatique.

Actuellement, on ne sait employer, pour « caractériser » un élastomère, qu'un duromètre qui fournit une valeur de résistance à la pénétration et donc une estimation du module, mais sans prise en compte de la tem et avec un fort facteur humain, et qui ne fournit aucune indication sur l'amortissement ou perte, et un système de marteau couplé à un accéléromètre qui ne donne qu'une indication globale c'est-à-dire une valeur qui prend en compte à la fois le module et l'amortissement, mais sans que l'on puisse individualiser ces deux paramètres. Cet appareil n'intègre pas non plus le facteur température et est également très sensible au facteur humain.

L'invention permet de mettre au point des pneumatiques, de sélectionner les meilleurs pneumatiques en fonction du sol, et/ou de l'état du sol (sec, humide), d'affecter une partie d'une série de pneumatiques à telles conditions (de course par exemple) et telle autre partie à telles autres conditions, voire d'écarter dans une série un pneumatique « hors normes », ou inversement d'adapter et / ou concevoir des routes adaptées aux pneumatiques commercialisés.

L'invention concerne enfin les pneumatiques ou sols sélectionnés ou conçus par l'emploi d'un procédé ou dispositif selon l'une quelconque des revendications 1 à 22.

L'invention couvre également tous les modes de réalisation et toutes les applications qui seront directement accessibles à l'homme de métier à la lecture de la présente demande, de ses connaissances propres, et éventuellement d'essais simples de routine.

## Revendications

1. Procédé pour effectuer, sur des critères d'adhérence maximale ou optimale sur un sol, la sélection d'un ou plusieurs types de pneumatiques parmi un choix plus large de pneumatiques, à une température d'utilisation T donnée des pneumatiques , ou inversement la sélection d'un sol par rapport aux caractéristiques des pneumatiques utilisés et de la température d'utilisation, **caractérisé en ce que**
a) on entre la température T et on trace la courbe tg delta en fonction de la température T et la courbe du module E' de l'élastomère de la bande de roulement du pneumatique,
b) on effectue un relevé de rugosité (profil) du sol considéré , éventuellement en fonction (b') de son « état » (sec, humide, mouillé;...), et éventuellement (b") des caractéristiques de drainage du sol, puis pour une vitesse de glissement donnée, on établit le spectre des sollicitations engendrées par le glissement sur le sol
c) on évalue le niveau de compatibilité ou corrélation entre les deux courbes respectivement du pneu et du sol
d) on sélectionne le ou les pneumatiques dont le pic de la courbe de tg delta correspond le mieux au pic de la courbe de rugosité du sol ou inversement en fonction de l'objectif recherché, on sélectionne le ou les revêtements correspondant le mieux au pic de tg delta du pneu.

2. Procédé selon la revendication 1 **caractérisé en ce que** pour la mise en oeuvre de l'étape a), on procède à la température d'essai T ou en effectuant un balayage en température (couvrant la gamme de température -30°C à +150°C), à l'étude de la courbe de réponse, en fonction du temps, de la bande de roulement du pneumatique considéré à un choc ou effort calibré de force H, et on déduit de l'amplitude de la réponse une valeur représentative P, R de la « perte » par l'élastomère, puis de cette valeur et du niveau de l'enfoncement mesuré lors du choc ou de l'effort, on en déduit une valeur représentative du module de l'élastomère.

3. Procédé selon la revendication 2 **caractérisé en ce que** on balaie toute une gamme de fréquence de choc ou effort incluant en particulier les fréquences correspondant aux fréquences de roulement du pneumatique (quelques hertz à quelques dizaines de hertz), les fréquences correspondant à l'indentation et aux sollicitations liées aux macro-rugosité des sols (typiquement 1kHz à 1 MHz) mais aussi les fréquences liées aux forces d'adhésion et aux micro-rugosités des sols (typiquement 1 MHz à 1 GHz).

4. Procédé selon la revendication 2 ou 3 **caractérisé en ce que** on provoque ledit choc sur la bande de roulement par l'impact d'une pointe de masselotte mue par un ressort calibré, lequel est étiré d'une longueur Ho également calibrée, puis lâché pour libérer la masselotte, et on enregistre les mouvements oscillatoires de la masselotte (c'est-à-dire une grandeur représentative de la réponse ou réaction du pneumatique à l'enfoncement dû au choc) en fonction du temps, ce qui donne accès aux grandeurs E donc M, R donc P, représentatives de l'amortissement ou « perte » et du « module » de l'élastomère de la bande de roulement considérée.

5. Procédé selon l'une quelconque des revendications 1 à 4 **caractérisé en ce que** on effectue pour l'étape a) un balayage des valeurs obtenues à différentes températures T ou à différentes fréquences.

6. Procédé selon l'une quelconque des revendications 1 à 5, **caractérisé en ce que** pour la mise en oeuvre de l'étape b), on mesure les hauteurs h des rugosités du sol et leur fréquences spatiales, (soit le spectre spatial du profil), afin d'établir pour une vitesse de glissement donnée le spectre en fréquence temporelle des sollicitations imposées par le profil du sol.

7. Procédé selon la revendication 6 **caractérisé en ce que** l'étape b ) incorpore une étape b') selon laquelle on détermine l'état du sol, notamment la hauteur d'eau, et son influence sur la rugosité « utile » (c'est-à-dire la rugosité en contact avec le pneumatique).

8. Procédé selon la revendication 6 ou 7 **caractérisé en ce que** l'étape b') comporte une étape b") de détermination des caractéristiques de drainage du sol et son influence sur l'état du sol et donc sur la rugosité « utile ».

9. Procédé selon la revendication 8 **caractérisé en ce que** on entre dans l'algorithme de calcul les états de sols suivants :
- sec
- humide (mouillé mais pas d'accumulation d'eau)
- faible hauteur d'eau (faible pluie)
- forte hauteur d'eau ( forte pluie)

10. Procédé selon l'une quelconque des revendications 6 à 9, **caractérisé en ce que**, pour la mise en oeuvre de l'étape b), on effectue un relevé de profil sol en déplaçant, sur un axe ou dans un plan sensiblement suivant l'horizontale, un capteur de mesure de distance dirigé vers le sol.

11. Procédé selon la revendication 10 **caractérisé en ce que** on effectue le relevé de profil sol en déplaçant ledit capteur selon une seule ligne ou trait ou sur plusieurs lignes ou traits d'une surface donnée du sol ou sur une surface donnée du sol.

12. Procédé selon la revendication 10 ou 11 **caractérisé en ce que** dans l'étape b), on relève la courbe de rugosité du sol selon ledit seul trait ou ladite seule ligne, et l'algorithme programmé calcule alors le spectre spatial des rugosités sol, puis, pour une vitesse de glissement V donnée, et à l'aide de l'équation F = V / d (avec F fréquence de sollicitation engendrée par une rugosité, d longueur d'onde spatiale de la rugosité), il en extrait le spectre en fréquence temporelle des sollicitations engendrées par le sol, et peut forunir également des critères représentatifs de la macro et de la micro-rugosité (basés sur un calcul de dispersion tel que l'écart type effectué dans les plages de fréquences spatiales correspondant respectivement à la macro et à la micro-rugosité) ainsi qu'une distribution des niveaux de rugosité en fonction des longueur d'onde spatiales.

13. Procédé selon l'une quelconque des revendications 1 à 12 **caractérisé en ce que** dans l'étape c), l'algorithme procède à l'évaluation de la compatibilité ou corrélation entre les courbes obtenues dans les étapes a) (courbe de réponse du pneumatique) et b) (courbe de sollicitation par le sol);

14. Procédé selon l'une quelconque des revendications 1 à 13 **caractérisé en ce que**, dans l'étape d), on recherche et on évalue l'écart entre le pic de la courbe tg delta et celui de la courbe de rugosité du sol, ou le recouvrement des courbes de sollicitation et de réponse et on sélectionne les pneumatiques ou (en fonction de l'objectif visé) les sols, correspondant à l'écart est le plus faible ou au recouvrement le plus élevé.

15. Procédé selon la revendication 14 **caractérisé en ce que** on redresse dans une première étape la courbe de rugosité du sol, c'est-à-dire que l'on met en oeuvre un algorithme qui transforme un profil réel en un profil « horizontal », on introduit dans une seconde étape les paramètres de présence d'eau, notamment faible ou forte hauteur d'eau, ou seulement mouillé, on introduit dans la mémoire les types de micro ou macro rugosités qui sont « comblées » par chaque type d'état, on obtient un profil sol dont, selon la hauteur d'eau, certaines macro ou micro rugosités ont disparu sous ladite eau, on intègre à cette étape un coefficient permettant d'intégrer la capacité de la bande de roulement du pneumatique à évacuer une partie de ladite eau, et l'algorithme effectue alors le même calcul d'adhérence que selon les revendications 1 à 14 sur la base de cette nouvelle courbe de rugosité utile.

16. Dispositif pour la mise en oeuvre de l'étape a) du procédé selon l'une quelconque des revendications 1 à 15, **caractérisé en ce que** il comprend une « tête de caractérisation » du pneumatique qui comporte
- une interface géométrique IG permettant d'appliquer ladite tête sur la bande de roulement,
- un moyen M1 permettant d'appliquer un choc ou effort calibré de force H sur la bande de roulement du pneumatique P,
- un moyen M2 adapté pour mesurer l'amplitude de la réponse de ladite bande de roulement audit choc, c'est-à-dire la distance ou hauteur de « rebond » du moyen M1 ou d'un repère fixe solidaire de M1,
- un système S1 adapté pour effectuer le suivi et l'étude de la courbe de ladite réponse en fonction du temps
- un système S2 adapté pour en déduire par le calcul une valeur représentative de la « perte » par l'élastomère de la bande de roulement puis, à partir de cette valeur et du niveau de l'enfoncement mesuré lors du choc ou de l'effort, pour déduire une valeur représentative du module de l'élastomère.
- un moyen M3 de mesure de la température d'essai T et éventuellement des moyens de montée en température permettant un balayage en température (couvrant typiquement la gamme de température -30°C à +150°C).

17. Dispositif selon la revendication 16 **caractérisé en ce que** ladite tête de caractérisation est constituée d'un corps 10 dont une première extrémité 20 est dessinée pour s'adapter étroitement à la surface 30 de la bande de roulement d'un pneumatique P, ledit corps contenant une masselotte M capable de coulisser avec un minimum de frottement selon l'axe longitudinal du corps, en passant par un orifice central 40 ménagé dans ladite première extrémité 20 et par un autre orifice central 50 ménagé dans la seconde extrémité opposée 60 dudit corps, ladite masselotte coulissant dans sa partie médiane dans un capteur 100 réalisant par couplage électromagnétique une mesure représentative du déplacement d'un point-repère de la masselotte, ladite masselotte étant solidaire dudit corps par l'intermédiaire d'un ressort 110 de raideur calibrée, et étant prolongée vers ladite seconde extrémité du corps par une tige ou tirette 70 traversant ledit autre orifice, avec une limite mécanique à son déplacement, notamment une butée 80 et un organe de préhension 90 ergonomique c'est-à-dire autorisant une bonne prise et un « lâchage » aussi instantané que possible.

18. Dispositif selon la revendication 17 **caractérisé en ce que** il comporte un ressort de raideur variable, et / ou des masselottes interchangeables de masses différentes et / ou plusieurs combinés ressort / masselotte calés sur des fréquences différentes.

19. Dispositif selon l'une quelconque des revendications 16 à 18 **caractérisé en ce que** les données sont envoyées vers une unité centrale de calcul, dans laquelle on a déjà rentré la température d'essai T et qui contient également le mode de calcul des courbes tg delta, courbe de module E' et courbe d'amortissement ou de perte E" (cf. figure 1) ; les courbes E' et E" donnent la courbe tg delta, et on conserve pour le calcul de sélection seulement les courbes E' et tg delta, et **en ce que** ledit dispositif peut comporter des moyens de balayage de la gamme de température T ou de fréquence, et comprend éventuellement un thermocouple.

20. Dispositif permettant de mettre en oeuvre l'étape b) du procédé selon l'une quelconque des revendications 1 à 16, **caractérisé en ce qu'**il comprend un capteur de mesure de distance dirigé vers le sol.

21. Dispositif selon la revendication 20 **caractérisé en ce que** ledit capteur utilise un faisceau de lumière blanche projeté sur le sol, et dont on trace le spectre chromatique à son retour vers la source, ledit faisceau retour étant dévié vers un spectromètre par un miroir semi réfléchissant intercalé sur son chemin optique retour, par l'application du principe optique de « stratigraphie en champ étendu », qui utilise et traite les points de focalisation de chaque couleur composant la lumière, qui sont fonction des défauts de la lentille.

22. Dispositif selon la revendication 20, **caractérisé en ce que** ledit capteur est choisi parmi
un dispositif de mesure de distance par laser, en utilisant en particulier de la triangulation optique, et
les dispositifs de mesure par interferométrie, à l'aide d'un palpeur mécanique de précision.

23. Pneumatiques ou sols sélectionnés ou conçus par l'emploi d'un procédé ou dispositif selon l'une quelconque des revendications 1 à 22.
